Europäisches Patentamt

European Patent Office

Office européen des brevets

(19)

(11) **EP 1 482 329 A1**

(12) **EUROPEAN PATENT APPLICATION**

(43) Date of publication:
**01.12.2004 Bulletin 2004/49**

(21) Application number: **03007366.2**

(22) Date of filing: **01.04.2003**

(51) Int Cl.⁷: **G01V 8/20**, H04N 7/18,
G06T 1/00

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **VBISS GmbH
74912 Kirchart (DE)**

(72) Inventor: **Bryant, Gary, c/o Vbiss GmbH
74912 Kirchart (DE)**

(74) Representative: **Hellmich, Wolfgang, Dr.-Ing.
Ernsbergerstrasse 14
81241 München (DE)**

(54) **Method and system for detecting hidden object under vehicle**

(57)     This invention concerns a method and system for detecting hidden objects (11) under vehicle (2). An image of the undercarriage (10) of a vehicle (2) is taken by a camera (3,4). Then the image is digitized in order to obtain a digital image. Then the digital image is compared to a reference image of the undercarriage (10) of the vehicle (2) in order to detect differences between the digital image and the reference image. Finally, watchmen are alerted if there are significant differences. Moreover, this invention relates to a system.

FIG.1

EP 1 482 329 A1

**EP 1 482 329 A1**

**Description**

The present invention pertains to a method and system for detecting hidden objects under vehicle.

The VBISS GmbH sells and Under Vehicle Surveillance system model III (UVSS III). It is designed to provide security personal with a fixed or mobile system that automatically scans, monitors and digitally records video images of the undercarriage of passenger vehicles to tractor-trucks and trailers for explosives, attached packages and other foreign objects. The UVSS III comprises an inspection ramp which is specially designed for use at areas traversed daily literally hundreds of heavy and oversized cargo-loaded trucks entering or exiting facilities.

The inspection ramp is 282 cm wide, 7.5 cm high and consists of four main camera sections and two shoulder sections. The camera mounts allow both vertical and horizontal adjustments. Each camera has 30 bright-white LED lights built into it, which permits the UVSS III to operate in extreme low light conditions. Cameras have fixed focus set at the factory to operate within ranges of 1.3 cm to 12m. A digital video recorder designed for UVSS III can record four channels at the same time and can display moving image in quad screen. Using wavelength algorithm, this system realizes compression and extraction in high resolution.

It is the object of this invention to provide a handier method and system for under vehicle surveillance.

This object is achieved by the subject matter of the independent claims.

Preferred embodiments of the invention are the subject matter of the dependent claims.

Taking the reference image when the vehicle enters into a security area and taking a second image when the vehicle leaves the security area, prevents thefts.

Taking the second image when the vehicle enters a security area helps to prevent vehicles having hidden explosives fixed to their undercarriage from entering into the security area.

Taking the second image of the undercarriage when the wheels of a vehicle pass over a pressure sensor insures that images are taken from a similar position. This in turn simplifies the comparison of images with reference images.

Composing an image of a sequence of sequence images finally provides an image having a higher resolution than the sequence images. Moreover it is only necessary that the field of view of the camera covers the width of a vehicle rather than its length in order to compose an image of the complete undercarriage of a vehicle.

The wheels can be easily detected in the images and reference images. These prominent points can be used to turn and distort the image in order to better fit the reference image.

Obtaining prominent measures like wheel center distance, wheel track or ground clearance of the vehicle from which the image stems advantageously helps to identify the correct reference image.

Using a plurality of low-quality cameras rather than a single high-quality camera may reduce the overall system costs.

In the following preferred embodiments of this invention are described referring to the accompanying drawing.

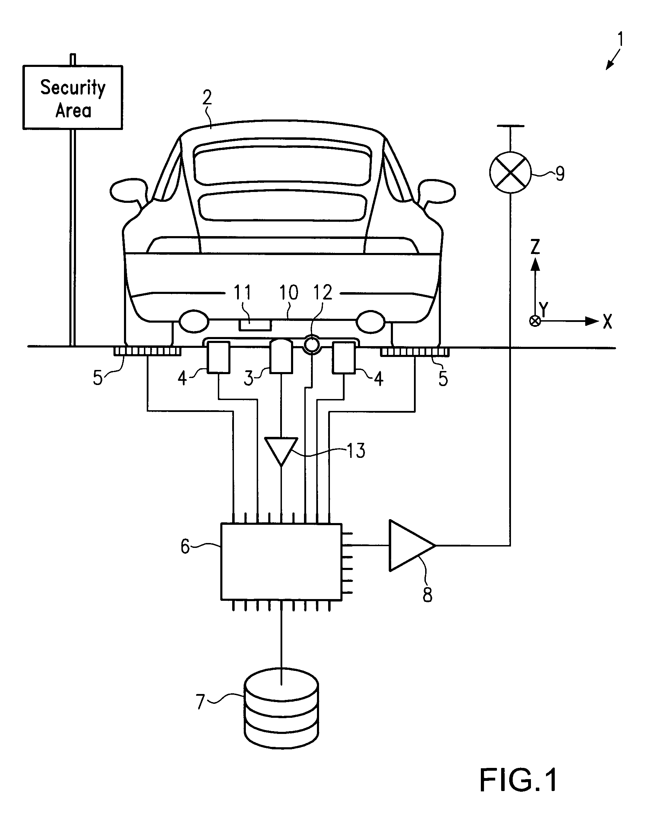

Fig. 1 shows an under vehicle surveillance system.

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspects of the present invention, the scope of which is defined by the appended claims.

Figure 1 shows an under vehicle surveillance system 1. This system takes images of undercarriage 10 of vehicle 2 in order to detect object 11. A plurality of cameras 3, 4 may be installed in order to take images of the undercarriage 10. Microprocessor 6 is connected to the cameras 3 and 4 and receives the digital images. The digital images may be either directly provided by the cameras or an analog-to-digital converter (ADC) 12 may be provided as illustrated for fisheye camera 3. Microprocessor 6 processes and compares digital images. It is connected to a mass storage medium illustrated by database 7. If microprocessor 6 detects significant differences between a reference image and a second image it may output an alert to amplifier 8 which drives an alarm device 9. The alarm device 9 may be a horn, a buzzer, a light etc. In an alternate embodiment amplifier 8 may control the opening or closing of a barrier.

Pressure sensor 5 may be provided in order to insure that the pictures are taken from a reproducible position. This simplifies the comparison of images. Each pressure sensor 5 may actually consist of an array of pressure sensors. In this embodiment not only the distance between cameras 3 and 4 to the front wheels is fixed (Y direction) but also the position of the vehicle in X direction can be determined. This additional information simplifies the comparison of images of the undercarriage because the second image can be shifted to an appropriate position before the comparison with the reference image. Two pressure sensor arrays may provide information on the wheel track. The latter information can be used to classify vehicles which will be detailed below.

A fisheye camera 3 may be used to take one picture of the whole undercarriage of a vehicle. Also line scan cameras can be used.

In another embodiment one camera may provide a sequence of sequence images of a stripe of the undercarriage covering the whole breadth but only the part of the length of the undercarriage. When the car passes over the camera the camera produces the sequence images which partly overlap each other. From the overlapping part of two successive sequence images and the velocity of the vehicle moving distance may be obtained which the vehicle moved in Y direction while the images were taken. From length of the overlapping portion compared to the image height (Y direction) and the moving distance the ground clearance can be calculated which, again, can be used to classify vehicles. After microprocessor 6 has combined the sequence of images to a single image, the wheel center distance may be obtained which is a prominent measure for classifying vehicles.

In another embodiment a plurality e.g. four cameras lined up in X direction may be provided. In this embodiment, the images of the plurality of cameras are composed to an images stripe covering the breadth of the undercarriage (X direction) but only part of the length of the undercarriage (Y direction). In this embodiment the ground clearance can be calculated from the overlapping portions of neighboring cameras because the distance of the cameras and their orientation is known. Then again a sequence of image strips may be combined to an image of the undercarriage.

In another embodiment, the focus of cameras 3 and 4 is adjusted in order to obtain a sharp image i.e. the contrast is maximized. Then the ground clearance is determined from the focus set.

In general a reference image of a car is obtained first and later on a second image of the undercarriage of the vehicle is obtained by under vehicle surveillance system 1. Also the reference image may be obtained by the under vehicle surveillance system 1. But in another embodiment a set of reference images may be stored in database 7 which is not updated during normal operation. In particular in military applications only a small number of different kinds of vehicles is used which can be stored beforehand in database 7. In these application an updating of database 7 may constitute an act of sabotage.

In one embodiment the reference image may be taken when a vehicle enters into a security area and second image may be taken when the vehicle leaves the security area. The reference image is stored in database 7 for the later comparison with the second image. In this case the under vehicle surveillance system helps to prevent theft of objects hidden under vehicles.

In another embodiment the reference image may be taken when a vehicle leaves a military installation and the second image is taken when it returns into the military installation. In this case the under vehicle surveillance system helps to detect objects which have been fixed to the undercarriage of the vehicle while it was on duty outside military installation. In this case the object may constitute explosive for committing acts of sabotage or terrorism.

Comparison of images involves a high computational effort. Moreover, under typical circumstances, a high number of reference images are stored in database 7. In general, in a first step the correct reference image must be determined. In a second step it is determined as to whether the differences between the correct reference image and the second image are significant i.e. caused by a hidden object or not significant i.e. caused by different lighting or a different camera position with respect to the vehicle.

In order to speed up the search process by reducing the computational effort involved, the correct reference images are stored in database 7 together with prominent features thereof. Prominent features which are comparatively easy to analyze are the wheel center distance, wheel track and ground clearance. These prominent features are also obtained when the second image is taken either from the second image itself or additional sensors. In a first search step the prominent features are compared in order to identify a small number of candidate reference images. Under ideal circumstances only a single candidate reference image is identified which is then compared to the second image in order to identify hidden objects. If more than one candidate reference image is identified, the correct reference image is determined based on differences between each of the candidate reference images and the second image, before the difference between the correct reference image and the second image are analyzed to identify hidden objects.

The under vehicle surveillance system may be augmented with additional cameras 12 which may be positioned in a similar fashion as in UVSS III. A program for automatic number plate recognition (ANPR) determines the plate numbers which are stored together with the reference images. Later on also the plate number of the vehicle, of which the second image is taken, is identified by the additional camera 12 and ANPR. When taking into account plate numbers the correct reference image should be found in database 7. Only in special circumstances when accidentally two authorities issue the same plate numbers additional prominent information can be used to identify the correct reference image out of a very small number of reference images.

The detection of the vehicle's wheels is important to determine the wheel center distance and the wheel track. The detection of the wheels is comparatively easy because the undercarriage appears approximately as a dark rectangle covering the center portion of the images. The wheels extend as dark objects into the bright frame from the longer sides of the rectangle. The wheel center distance and the wheel track may be obtained in arbitrary units like image pixels. Before a comparison, the second image may be turned and distorted so that the positions of the wheels in the reference and the second image match exactly.

The comparison of a reference and second image may be performed by the following equation:

$$S = \sum_{i=1}^{I}\sum_{j=1}^{J}\left| \frac{p_{i,j}}{rp_{i,j}} - \frac{1}{IJ}\sum_{i=1}^{I}\sum_{j=1}^{J}\frac{p_{i,j}}{rp_{i,j}} \right| \qquad (1)$$

S is a similarity parameter, $p_{i,j}$ are the pixels of a second image, $rp_{i,j}$ are the pixels of the reference image, i and j are the vertical and horizontal indexes of the pixels ranging from 1 to i and j, respectively. The pixel quotient of $p_{i,j}/rp_{i,j}$ is 1 if the images are identical and is expected to have a constant value close to 1 throughout the images, provided that only the lighting conditions are different. Therefore, the average quotient

$$\frac{1}{IJ}\sum_{i=1}^{I}\sum_{j=1}^{J}\frac{p_{i,j}}{rp_{i,j}}$$

is subtracted in order to compensate for different lighting conditions. For identical images, S is 0. The greater the differences between the images, the greater S. If the images are colored, the similarity parameter may be the sum of the similarity parameters calculated for each color. The pixel quotient $p_{i,j}/rp_{i,j}$ may be replaced by the pixel difference $p_{i,j}-rp_{i,j}$ in equation (1).

In order to compensate for a different camera position, before calculating the final similarity parameter, the second image may be turned and distorted in order to minimize the tentatively calculated similarity parameter. The final similarity parameter is the smallest of the tentatively calculated similarity parameter.

If S is smaller than a lower threshold, the differences between the images are considered to be not significant and vice versa. The reference image out of a group of candidate reference images is considered to be the correct one which results in the lowest similarity parameter.

Further modifications and variations of the present invention will be apparent to those skilled in the art in view of this description. Accordingly, this description is to understood that the forms of the invention shown and described herein are to be taken as the presently preferred embodiments.

**Claims**

1. A method for detecting hidden objects under (11) vehicle comprising:

   taking a second image of the undercarriage (10) of a vehicle (2) by a camera (3,4);

   digitizing (12) said second image in order to obtain a digital image;

   comparing (6) said digital image to a reference image of the undercarriage (10) of the vehicle (2) in order to detect differences between said digital image and said reference image; and

   alerting (9) if there are significant differences.

2. The method of claim 1, further comprising:

   taking said reference image when said vehicle enters into a security area; and

   taking said second image when said vehicle leaves said security area.

3. The method of claim 1, claimed by:

   taking said reference image before the vehicle (2) leaves an installation or plant for a task; and

   taking said second image when the vehicle (2) returns into said installation or plant.

4. The method of one of the claims above, further comprising:

taking said second image when the wheels of said vehicle pass over a pressure sensor (5).

5. The method of one of the claims above, further comprises:

taking a sequence of sequence images when said vehicle passes said camera (3,4);

6. The method of one of the claims above, further comprising:

detecting the position of the wheels on said digital image and on said reference image;

turning and/or distorting said image in order to bring the wheels on said image and said reference image into the same position before comparing said digital image with said reference image.

7. The method of one of the claims above further comprising:

storing a plurality of reference images of a plurality of different vehicles in a database together with vehicle information of the respective kind of vehicle which comprises at least one of the following:

wheel center distance;

wheel track; and

ground clearance;

extracting at least one of the following vehicle information from said digital image:

wheel center distance

wheel track; and

ground clearance;

selecting a reference image so that the vehicle information associated with said reference image fits the vehicle information obtained from said image.

8. A system for detecting hidden objects (11) under vehicle comprising:

a camera (3,4) for taking an image of the undercarriage (10) of a vehicle;

a memory (7) for storing a reference image; and

a processor (6) connected to said camera (3,4) and said memory (7) for receiving said image from said camera (3,4) comparing said image to said reference image and outputting an alert (9) if there are significant differences between said image and said reference image.

9. The system of claim 8, further comprising:

a plurality of cameras (3,4) providing their images to said processor (6).

10. The system of claims 8 or 9, wherein said camera (3) is provided with a fisheye lens or a line scan camera is used.

FIG.1

European Patent
Office

**EUROPEAN SEARCH REPORT**

Application Number

EP 03 00 7366

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 271 483 A (SOLICITOR FOR THE AFFAIRS OF H) 13 April 1994 (1994-04-13)<br>* page 1, line 1 - line 4 *<br>* page 1, line 17 - line 22 *<br>* page 2, line 4 - line 14 *<br>* page 3, line 5 - line 10 *<br>* page 4, line 1 - line 13 *<br>* claims 1,2,5-8; figure 2 *<br>--- | 1-3,6-8, 10 | G01V8/20<br>H04N7/18<br>G06T1/00 |
| X | EP 0 485 192 A (GEC FERRANTI DEFENCE SYST) 13 May 1992 (1992-05-13)<br>* column 1, line 1 - line 3 *<br>* column 1, line 25 - line 28 *<br>* column 1, line 41 - line 50 *<br>* column 3, line 34 - line 46 *<br>* claims 1,6; figures 1,2 *<br>--- | 1-3,5-9 | |
| X | YEOMAN C R: "Under vehicle examination and novel applications of digital storage techniques"<br>SECURITY TECHNOLOGY, 1995. PROCEEDINGS. INSTITUTE OF ELECTRICAL AND ELECTRONICS ENGINEERS 29TH ANNUAL 1995 INTERNATIONAL CARNAHAN CONFERENCE ON SANDERSTEAD, UK 18-20 OCT. 1995, NEW YORK, NY, USA,IEEE, US,<br>18 October 1995 (1995-10-18), pages 119-128, XP010196401<br>ISBN: 0-7803-2627-X<br>* page 119, column 1 - page 120, column 1 *<br>* page 121, column 1 *<br>* page 122, column 2, line 5 - line 6 *<br>* page 125, column 1, paragraph 3 *<br>--- | 1-3,6-8, 10 | TECHNICAL FIELDS SEARCHED (Int.Cl.7)<br><br>G01V<br>H04N<br>G06T |

-/--

The present search report has been drawn up for all claims

| Place of search | Date of completion of the search | Examiner |
|---|---|---|
| MUNICH | 8 September 2003 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 00 7366

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DICKSON P. ET AL.: "Mosaic Generation for Under Vehicle Inspection" PROCEEDINGS OF THE 6TH IEEE WORKSHOP ON APPLICATIONS OF COMPUTER VISION (WACV'02), 3 - 4 December 2002, pages 251-256, XP002253684 * abstract * * page 251, column 2, paragraph 1.2 - page 252, paragraph 1.3 * * page 253, column 2, paragraph 2 - page 254 * * page 256, column 2, line 2 - line 6 * | 1-3,6,7, 9 | |
| A | JP 2001 221713 A (SFC:KK;TOKYO MATSUSHITA SYSTEMS CO LTD) 17 August 2001 (2001-08-17) * abstract; figures 1-4 * | 1-10 | |
| A | JP 08 146148 A (TAKEDA HARUMI) 7 June 1996 (1996-06-07) * abstract; figure 1 * | 1-10 | |
| A | JP 10 081209 A (TAMAGAWA SEIKI CO LTD) 31 March 1998 (1998-03-31) * abstract * * figure 1 * | 1-10 | |

TECHNICAL FIELDS SEARCHED (Int.Cl.7)

The present search report has been drawn up for all claims

| Place of search | Date of completion of the search | Examiner |
|---|---|---|
| MUNICH | 8 September 2003 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 482 329 A1**

## ANNEX TO THE EUROPEAN SEARCH REPORT
### ON EUROPEAN PATENT APPLICATION NO.
EP 03 00 7366

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2003

| Patent document cited in search report | | Publication date | Patent family member(s) | | Publication date |
|---|---|---|---|---|---|
| GB 2271483 | A | 13-04-1994 | NONE | | |
| EP 0485192 | A | 13-05-1992 | GB | 2249690 A | 13-05-1992 |
| | | | EP | 0485192 A2 | 13-05-1992 |
| JP 2001221713 | A | 17-08-2001 | NONE | | |
| JP 08146148 | A | 07-06-1996 | NONE | | |
| JP 10081209 | A | 31-03-1998 | NONE | | |

EPO FORM P0459

For more details about this annex : see Official Journal of the European Patent Office, No. 12/82

9